# EUROPÄISCHE PATENTANMELDUNG

(11) **EP 2 123 946 A2**
(43) Veröffentlichungstag der Anmeldung: **25.11.2009**
(21) Anmeldenummer: 09155823.9
(22) Anmeldetag: 23.03.2009
(51) Int. Cl.: F16H 61/28

(54) **Anordnung zum Unterstützen von manuellen Schaltungen**

(30) Priorität: 09.05.2008 DE 102008001688
(71) Anmelder: ZF Friedrichshafen AG, 88038 Friedrichshafen (DE)
(72) Erfinder: Birk, Reinhard, 88142 Wasserburg (DE); Führer, Gerhard, 88048 Friedrichshafen (DE); Führer, Kim, 88131 Lindau (DE); Aicher, Karl-Josef, 88069 Tettnang (DE)

(57) **Zusammenfassung**

Es wird eine Anordnung zur Unterstützung von manuellen Schaltungen eines Fahrers bei einem Getriebe eines Fahrzeuges mit zumindest einem Schaltservo vorgeschlagen, wobei die von dem Schaltservo ausgegebene Unterstützungskraft mittels einer Aktorik steuerbar ist. Erfindungsgemäß ist die Aktorik mit zumindest einem Steuergerät (2) zur Adaption der Unterstützungskraft in Abhängigkeit von vorbestimmten Eingangsgrößen des Antriebsstranges gekoppelt.

## Beschreibung

Die vorliegende Erfindung betrifft eine Anordnung zum Unterstützen von manuellen Schaltungen eines Fahrers bei einem Getriebe eines Fahrzeuges mit zumindest einem Schaltservo gemäß der im Oberbegriff des Patentanspruches 1 näher definierten Art.

Aus der Fahrzeugtechnik ist die Verwendung von Schaltservos in Haltschaltgetrieben bei Kraftfahrzeugen bekannt. Dabei wird je nach aufgebrachter Handschaltkraft des Fahrzeugführers über ein Proportionalventil die Kraftunterstützung zur Handschaltkraft dazu addiert. Der Nachteil dieser Schaltkraftunterstützung liegt darin, dass die Unterstützung der Handschaltkraft bis in Synchronlebensdauer schädigende Bereiche hinein möglich ist. Des Weiteren wird bei bekannten Anordnungen auch eine Kraftunterstützung bei unlogischen Schaltungen vorgesehen, die z. B. nicht zu einem Anschlussgang einer Fahrsituation passen und das Getriebe oder den Antriebsstrang schädigen können.

Des Weiteren ist beispielsweise aus der Druckschrift DE 103 39 151 A1 eine elektro-pneumatische Schalteinheit für ein Getriebe eines Fahrzeuges bekannt. Die bekannte Schalteinheit umfasst eine Servounterstützungseinrichtung, die den Fahrzeugführer bei manuellen Schaltungen unterstützt. Die bekannte Schalteinheit umfasst ein Ventil, welches in Abhängigkeit von der Position der Schaltstelle über ein Druckreduzierventil den Servodruck reduziert. Die Position der Schaltwelle wird mechanisch erfasst. Somit ist die Einstellung des Servodruck abhängig von den geometrischen nicht änderbaren Abmessungen der Schaltwelle beziehungsweise Schaltgasse. Eine bedarfsgerechte Unterstützung der Schaltkraft ist mit der bekannten Schalteinheit nicht möglich.

Der vorliegenden Erfindung liegt die Aufgabe zu Grunde, eine Anordnung der eingangs beschriebenen Gattung vorzuschlagen, welche eine Ansteuerung der Unterstützungskraft bedarfsgerecht ermöglicht, sodass eine geforderte Synchronisierungslebensdauer bei dem Getriebe sichergestellt wird.

Diese Aufgabe wird durch die Merkmale des Patentanspruches 1 gelöst. Weitere vorteilhafte Ausgestaltungen ergeben sich aus den Unteransprüchen und den Zeichnungen.

Demnach wird eine Anordnung zum Unterstützen von manuellen Schaltungen eines Fahrers bei einem Getriebe eines Fahrzeuges mit zumindest einem Schaltservo oder dergleichen vorgeschlagen, wobei die von dem Schaltservo ausgegebene Unterstützungskraft über eine Aktorik steuerbar ist. Erfindungsgemäß kann die Aktorik mit zumindest einem Steuergerät zur Adaption der Unterstützungskraft in Abhängigkeit von vorbestimmten Eingangsgrößen des Antriebsstranges gekoppelt werden.

Mit der erfindungsgemäßen Anordnung wird eine Schaltkraftansteuerung ermöglicht, die die geforderte Synchronisierungslebensdauer bei dem Getriebe gewährleistet. Dazu wird ein Steuergerät oder dergleichen vorgesehen, welches in Abhängigkeit von vorbestimmten Eingangsgrößen des Getriebes und des Fahrzeuges sowie von Eingangsgrößen, welche den Fahrerwunsch betreffen, eine bedarfsgerechte und vollständig variable Ansteuerung der Aktorik des Schaltservos ermöglicht. Somit kann eine gewünschte Unterstützungskraft auf jedes Niveau und auch in jede Betätigungsrichtung, das heißt bezogen auf die vom Fahrer aufgebrachte Schaltkraft gleichgerichtet oder entgegengesetzt, bis zur vollständigen Abschaltung eingestellt werden.

Gemäß einer vorteilhaften Ausführungsvariante der Erfindung kann vorgesehen sein, dass das Steuergerät mit zumindest einem Sensor oder dergleichen zum Erfassen der Eingangsgrößen gekoppelt ist, wobei das Steuergerät anhand der erfassten Eingangsgrößen aus gespeicherten Kennfeldern oder dergleichen entsprechende Ausgangsgrößen zur Adaption und/oder Modulation der Unterstützungskraft ermittelt. Auf diese Weise kann das Steuergerät über die Sensoren den jeweiligen Getriebezustand, Fahrzeugzustand und auch Fahrerwunsch erfassen. Mit diesen Messgrößen kann z.B. ein Prozessor des Steuergerätes aus den abgespeicherten Kennfeldern ermitteln, ob die Schaltkraft auf die Synchronisierung vergrößert werden oder verringert werden soll. Demzufolge kann die Aktorik des Schaltservos angesteuert werden, um eine entsprechende Unterstützungskraft durch den Schaltservo aufzubringen.

Zum Ermitteln der Eingangsgrößen können beliebige Sensoren verwendet werden. Vorzugsweise können z.B. Sensoren zum Erfassen der vom Fahrzeugführer aufgebrachten Schaltkraft, der Getriebetemperatur, der Drehzahlen zum Beispiel an der Antriebs- und Abtriebswelle oder auch andere Drehzahlen, des Ganges, des Druckes, des Kupplungsweges und/oder weiterer den Synchronisiervorgang beeinflussender Messgrößen eingesetzt werden, die mit dem Steuergerät gekoppelt sind.

Beispielsweise kann die erfindungsgemäße Anordnung vorsehen, dass die Schaltkraft über der Reibgeschwindigkeit während eines Schaltvorganges angepasst wird. Zum Beispiel kann bei Beginn einer Synchronisierung mit sehr hoher Reibgeschwindigkeit, zum Beispiel erlaubte Schaltung bei gewolltem Gangüberspringen, die Schaltkraft auf den zulässigen Wert reduziert werden und während der Synchronisation der Drehzahlen und Reduktion der Reibgeschwindigkeit auf die zulässige Höhe für den maximalen Komfort gesteigert werden. Dadurch wird die Anpassung der Schaltkraft während eines Schaltvorganges durch die Sensierung von An- und Abtriebsdrehzahl und deren Veränderungen im Rahmen zulässiger Werte (p x v -Belastungskurve) ermöglicht.

Die von dem Schaltservo aufgebrachte Unterstützungskraft mit der dazugehörigen Aktorik kann zum Beispiel pneumatisch, hydraulisch, elektromotorisch und/oder elektromagnetisch oder dergleichen aufgebracht werden.

Zur Ansteuerung der Aktorik des Schaltservos können bevorzugt Puls-Weiten-Modulationssignale (PWM) verwendet werden. Es ist auch möglich, dass das Steuergerät die Aktorik über Puls-Frequenz-Modulationssignale (PFM) ansteuert. Es sind auch andere Ansteuerungsmöglichkeiten denkbar.

Eine mögliche Ausführungsvariante der Erfindung kann vorsehen, dass eine adaptive Begrenzung der Unterstützungskraft des Schaltservos realisiert wird, wobei die Anordnung ein über eine elektrisch angesteuerte Aktorik pneumatisch betätigtes Schaltservo verwendet. Das Steuergerät ist mit zumindest einem Druckbegrenzungsventil oder dergleichen gekoppelt, welches den zulässigen Druck zumindest eines Wegeventil oder dergleichen begrenzt, wobei das Druckbegrenzungsventil und das Wegeventil die Aktorik des als Druckzylinder ausgebildeten Schaltservos bilden. Vorzugsweise kann das Wegeventil zum Ausfahren beziehungsweise Betätigen des Druckzylinders mit einem ersten Druckraum und zum Entlüften mit einem zweiten Druckraum des Druckzylinders verbunden sein. Auf diese Weise kann je nach elektrischer Ansteuerung durch das Steuergerät ein vorbestimmter Servodruck zum Unterstützen der von dem Fahrer aufgebrachten Schaltkraft erzeugt werden. Auf diese Weise kann eine adaptive Druckbegrenzung mit der erfindungsgemäßen Anordnung realisiert werden.

Eine weitere mögliche Ausführungsvariante der Erfindung kann eine Modulation der Unterstützungskraft des Schaltservos ermöglichen, indem die Anordnung ebenfalls einen über eine elektrisch angesteuerte Aktorik pneumatisch betätigten Schaltservo verwendet. Das Steuergerät ist bei dieser Ausführungsvariante mit zumindest einem Belüftungsventil oder dergleichen zum Ausfahren des Druckzylinders und mit zumindest einem Entlüftungsventil oder dergleichen zum Entlüften des Druckzylinders gekoppelt, wobei das Belüftungsventil und das Entlüftungsventil die Aktorik des als Druckzylinder ausgebildeten Schaltservos bilden. Vorzugsweise kann jeweils ein erstes Belüftungsventil zum Ausfahren des Druckzylinders in eine erste Betätigungseinrichtung und ein erstes Entlüftungsventil zum Einfahren des Druckzylinders jeweils mit einem ersten Druckraum des Druckzylinders verbunden sein.

Zudem kann ein zweites Belüftungsventil zum Ausfahren des Druckzylinders in eine zweite Betätigungsrichtung und ein zweites Entlüftungsventil zum Einfahren des Druckzylinders jeweils mit einem zweiten Druckraum des Druckzylinders verbunden sein. Auf diese Weise kann bei der vorbeschriebenen Ausführungsvariante die Unterstützungskraft des Schaltservos sowohl die Schaltkraft in beliebiger Höhe vergrößern als auch dieser entgegenwirken.

Die erfindungsgemäß vorgeschlagene Anordnung kann beliebig eingesetzt werden. Vorzugsweise können gemäß einer nächsten Ausgestaltung der Erfindung auch weitere im Folgenden nur beispielhaft beschriebene Antriebsstrangfunktionen oder dergleichen über das Steuergerät angesteuert werden. Somit können z. B. mechanisch realisierte Antriebsstrangfunktionen, wie z. B. Sperren im Getriebe, ersetzt werden oder es kann eine Redundanz durch die erfindungsgemäße Anordnung realisiert werden. Demzufolge können über das Steuergerät neben der Schaltkraftunterstützung weitere Antriebsstrangfunktionen angesteuert werden.

Beispielsweise kann die erfindungsgemäße Anordnung eine Schaltkraftunterstützung bis in einen zulässigen Belastungsbereich der Schaltelemente beziehungsweise der Synchronisierungen hinein realisieren. Dies bedeutet, dass die Anordnung über das Steuergerät die Kraft erfasst, mit der der Fahrer schaltet und addiert den in dieser speziellen Situation zulässigen Betrag hinzu. Auf diese Weise kann ein deutlicher Gewinn an Schaltkomfort erreicht werden, da der Fahrer immer mit minimaler Kraft schalten kann und der Schaltservo die Hauptkraft bis zur zulässigen Grenze liefert. Durch die entsprechende Berücksichtigung von Kennfeldern ergibt sich eine jeweils an den Zustand des Antriebsstranges und an den Fahrerwunsch angepasste Unterstützung. Demzufolge wird eine nicht proportionale Schaltkraftunterstützung zur maximalen Komfortsteigerung unter Berücksichtigung der gewährleisteten Synchronlebensdauer mit der erfindungsgemäß vorgeschlagenen Anordnung realisiert.

Es ist auch möglich, dass die vorgeschlagene Anordnung aufgrund von entsprechenden Eingangsgrößen an dem Steuergerät eine Schaltkraftregelung beziehungsweise Schaltkrafthemmung bei Überschreiten der zulässigen Schaltkraft im Hinblick auf die gewährleistete Synchronlebensdauer realisiert. Dies bedeutet, dass der Fahrer, wenn er es gewohnt ist mit höherer Schaltkraft kürzere Synchronzeiten zu erzielen, vom Schaltservo darauf trainiert wird, dass nur eine minimale Synchronzeit mit beliebig hoher Schaltkraft erzielbar ist. Unbewusst ausgeübte, höhere als von der Anordnung zugelassene und die Synchronisierung schädigende Schaltkräfte werden auf das zugelassene Maß reduziert, um die gewährleistete Synchronlebensdauer zu erreichen. Demzufolge arbeitet der Schaltservo der erfindungsgemäßen Anordnung gegen den Fahrer zum Schutz des Getriebes, ohne dass der Fahrer es bewusst wahrnimmt.

Eine Unterbindung beziehungsweise Hemmung nicht logischer oder nicht erlaubter Schaltungen kann ebenfalls durch die erfindungsgemäße Anordnung aufgrund der entsprechenden Eingangsgrößen bei dem Steuergerät realisiert werden. Beispielsweise kann das Einlegen des Rückwärtsganges bei hoher Vorwärtsgeschwindigkeit oder das Einlegen eines Ganges, der beteiligte Bauteile extrem schädigt, z.B. durch das Zerstören einer Kupplung durch Fliehkraft bei Überdrehzahlen oder Ansynchronisieren eines Ganges mit unzulässig hoher Reibgeschwindigkeit mit Zerstörung des Synchronreibbelages, durch die erfindungsgemäße Anordnung verhindert werden.

Die erfindungsgemäße Anordnung ermöglicht auch den Ersatz einer mechanischen Neutralstellungsblockierung zum Beispiel bei einem Einsatz eines Nebenabtriebes. Beispielsweise bei einem Nutzfahrzeug, zum Beispiel mit einer Drehleiter oder dergleichen, ist es erforderlich, dass bei Einsatz des Nebenabtriebes zum Bewegen der Drehleiter sichergestellt ist, dass sich das Fahrzeug nicht bewegen kann. Es ist auch möglich, die so genannte Interlockfunktion mithilfe der vorgeschlagenen Anordnung aufgrund der Berücksichtigung entsprechender Eingangsgrößen durch das Steuergerät zu realisieren. Dadurch wird das Schalten im Hauptgetriebe zeitweise gesperrt (Neutralstellungsblockierung), um ein entsprechendes Schalten einer vorgeschalteten oder nachgeschalteten Bereichsgruppe zu ermöglichen. Beispielsweise bei der Verwendung von zwei oder drei-Stellungszylinder kann z.B. durch Belüftung beider Druckräume mit vollem Druck eine entsprechende Blockierung realisiert werden.

Des Weiteren kann mit der vorgeschlagenen Anordnung eine temperaturabhängige Überschreitung einer Gesamtschaltkraft zum Beispiel bei geringen Fahranteilen des Fahrzeuges, die keinen nennenswerten Einfluss auf die gesamte Lebensdauer der Synchronisierung haben, realisiert werden. Dies bedeutet, dass beispielsweise seltene Tieftemperaturschaltungen zur deutlichen Komfortverbesserung über die übliche Schaltkraft hinaus unterstützt und somit ausgeübt werden. Auch hier ist es nicht erforderlich, dass der Fahrer eine überhöhte Schaltkraft ausüben muss, weil der Schaltservo entsprechend unterstützt. Somit können Kaltschaltungen ebenso komfortabel vom Fahrer ausgeübt werden, wie es z.B. bei Schaltungen im normalen Betriebstemperaturzustand des Getriebes möglich ist.

In vorteilhafter Weise kann mit der vorgeschlagenen Anordnung bei Bedarf die Ansteuerung der resultierenden Schaltkraft derart vorgesehen werden, dass diese dem Schaltkomfort beziehungsweise der allgemeinen Synchronfunktionen dient, z.B. um eine Glättung bei Reibkegeln bei Synchronisierungen zu beseitigen, indem eine Schaltkraftüberhöhung in bestimmten Bereichen vorgesehen wird. Das Steuergerät erkennt durch entsprechende Eingangsgrößen Abweichungen von Schaltkräften beziehungsweise von Synchronzeiten von standardmäßig hinterlegten Werten. Durch die Überhöhung der Schaltkraft kann durch Einfressen in die Oberfläche bei der Überlastung an den geglätteten Reibkonusbereichen eine vorteilhafte Aufrauhung erreicht werden.

Eine weitere mögliche Anwendung der erfindungsgemäßen Anordnung liegt darin, dass die Schaltkraftunterstützung in Abhängigkeit davon durchgeführt wird, ob die Kupplung vollständig beziehungsweise nicht vollständig ausgerückt ist. Dies kann über das Steuergerät erkannt werden und entsprechend bei der Ansteuerung der Unterstützungskraft berücksichtigt werden. Beispielsweise kann dazu das Trägheitsmoment über mehrere Gangschaltungen hinweg erfasst und beurteilt werden und gegebenenfalls zum Beispiel eine Schadensmeldung im Display beziehungsweise Fehlerspeicher für den Fahrer angezeigt werden.

Ein weiterer Anwendungsbereich der vorgeschlagenen Anordnung sieht vor, dass Ausnahmeschaltungen beziehungsweise Notschaltungen zugelassen werden, wenn diese nicht den Regelschaltungen entsprechen. Wenn von dem Fahrer zu häufig Schaltungen mit hoher Schaltkraft ausgeübt werden, können diese Schaltungen auf ein Kraftniveau, das der geforderten Synchronlebensdauer entspricht, wie oben beschrieben, reduziert werden. Wird vom Fahrer eine Ausnahmeschaltung ausgeführt, die von der Höhe der Schaltkraft und der Motordrehzahl auf Dauer Schäden des Antriebsstranges nach sich ziehen könnte, wird diese Schaltung zugelassen beziehungsweise mit voller Schaltservokraft unterstützt. Dadurch kann die Ausführung der Notschaltung sichergestellt werden. Es ist auch möglich, dass die Schaltkraft fahrerabhängig durch Überprüfung so genannter Fahrerkarten gewählt wird.

Die erfindungsgemäße Anordnung kann auch eine Schaltblockierung beziehungsweise eine eindeutige Hemmung bei parallelen Getriebeschaltungen zum Erreichen sequenzieller Schaltungen, z.B. bei einer pneumatischen Schaltung einer nachgeschalteten Bereichsgruppe und einer Hauptgetriebeschaltung, als Ersatz zum Beispiel für die aktuelle mechanische Interlockfunktion von Bereichsgruppengetriebe realisiert werden, wenn dies von dem Steuergerät durch entsprechende Eingangsgrößen erkannt wird.

Es ist auch möglich, dass die Anordnung zur Abschaltung der Unterstützung bei einer Schaltung über das nachgeschaltete Gruppengetriebe vorgesehen wird. Auf diese Weise kann eine vorgegebene Schaltungspriorität eingehalten werden, indem das Steuergerät die Schaltungspriorität als Eingangsgröße erfasst.

Gemäß einer möglichen Ausgestaltung der Erfindung kann auch vorgesehen sein, dass die Aktorik beziehungsweise die Ventile zur Betätigung eines vorgeschalteten Bereichsgetriebes und eines nachgeschalteten Bereichsgetriebes mit der Aktorik der erfindungsgemäßen Anordnung in eine Einheit zusammengefasst beziehungsweise integriert werden, welches einer logischen Weiterentwicklung der Getriebeaußenschaltung entspricht.

Bei der erfindungsgemäßen Anordnung kann z.B. das Steuergerät als Eingangsgrößen auch die Anzeigefunktionen R-Gang, R-Gang-Neutral, Neutralstellung in allen Gassen, erster Gang, höchster Gang, vorgeschaltetes Bereichsgetriebe und/oder nachgeschaltetes Bereichsgetriebe aktiv, zum Beispiel aus der Berechnung der Getriebeübersetzung zwischen An- und Abtriebswellendrehzahl beziehungsweise Stellung der Drehwelle in der Schalteinrichtung, erfassen.

Eine weitere vorteilhafte Anwendung der erfindungsgemäßen Anordnung liegt darin, dass bei Erkennen einer Zahn-auf-Zahnstellung durch das Steuergerät eine Druckmodulation bei jedem Druckraum des z. B. als Druckzylinder ausgebildeten Schaltservos vorgesehen wird, um die Zahn-auf-Zahn-Stellung aufzulösen.

Des Weiteren kann mit der vorgeschlagenen Anordnung durch entsprechende Ansteuerung der Unterstützungskraft eine Endlagendämpfung z.B. im Hauptgetriebe und auch bei den Bereichsgruppengetrieben realisiert werden.

Die Anordnung zum Unterstützen von manuellen Schaltungen eines Fahrers kann bei der Ansteuerung der Unterstützungskraft auch unterschiedliche Einsatzfälle des Fahrzeuges, wie z.B. Einsatz im Fernverkehr oder der Einsatz im Verteilerverkehr, mit den daraus resultierenden unterschiedlichen Schalthäufigkeiten durch die Sensierung der Abtriebsdrehzahl mit der entsprechenden Schalthäufigkeit pro Kilometer und der Zuordnung der maximal möglichen Gesamtschaltkraft zur Erreichung der geforderten Synchronlebensdauer berücksichtigen.

Beispielsweise kann die Lebensdauer sämtlicher Synchronpakete eines Getriebes auf Basis auftretender unterschiedlicher Schalthäufigkeiten der Synchronpakete durch Gegensteuerung mit entsprechender Synchronbelastung harmonisiert werden.

Die erfindungsgemäße Anordnung kann beispielsweise eine mechanische Raste Gangstellung Neutral durch Erfüllen der entsprechenden Funktion mit angepassten Luftdrücken ersetzen. Dadurch ergibt sich der Vorteil, dass ein geringerer baulicher Aufwand im Getriebe erforderlich ist und die sonst erforderliche Rastenüberwindungskraft bei der Schaltung Gang ein entfallen kann.

Des Weiteren kann die vorgeschlagene Anordnung eine mechanische Gangraste Gang ein mit der Zusatzfunktion, Erkennen des schädlichen Gangspringens und entsprechendes Entgegenhalten, ersetzen. Dadurch ergibt sich wiederum der Vorteil, dass ein geringerer baulicher Aufwand im Getriebe erforderlich ist und zu dem die Rastenüberwindungskraft bei der Schaltung Gang aus entfallen kann.

Zudem kann die Anordnung die Wegfahrsperre bei Diebstahl des Fahrzeuges durch Schalten und durch Blockieren in der Neutralstellung unterstützen.

Nachfolgend wird die vorliegende Erfindung anhand der Zeichnungen näher erläutert. Es zeigen:
Fig. 1 eine schematische Ansicht einer ersten möglichen Ausführungsvariante einer erfindungsgemäßen Anordnung;
Fig. 2 eine schematische Ansicht einer zweiten möglichen Ausführungsvariante der erfindungsgemäßen Anordnung; und
Fig. 3 ein Diagramm mit beispielhaften PWM-Signalen zur Ansteuerung einer Aktorik eines Schaltservos.

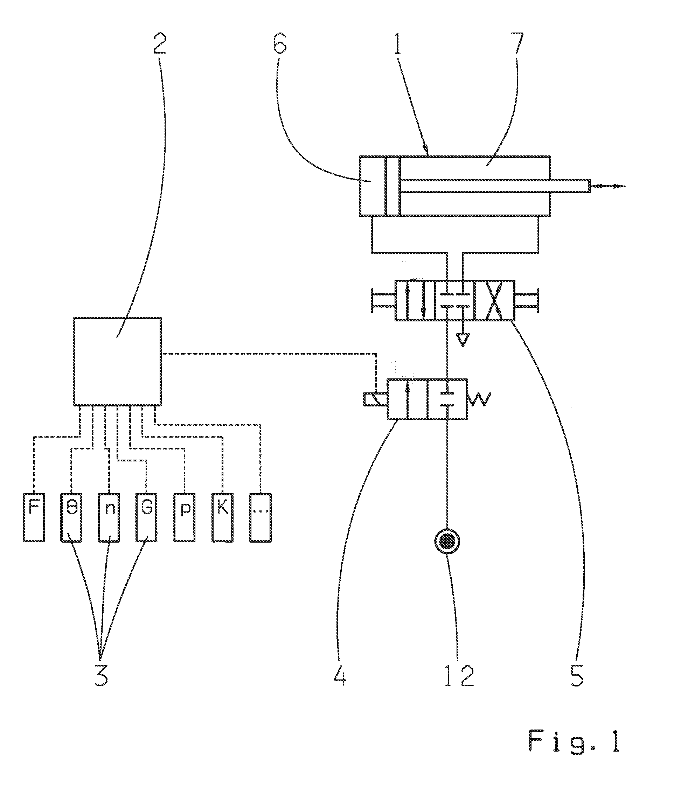

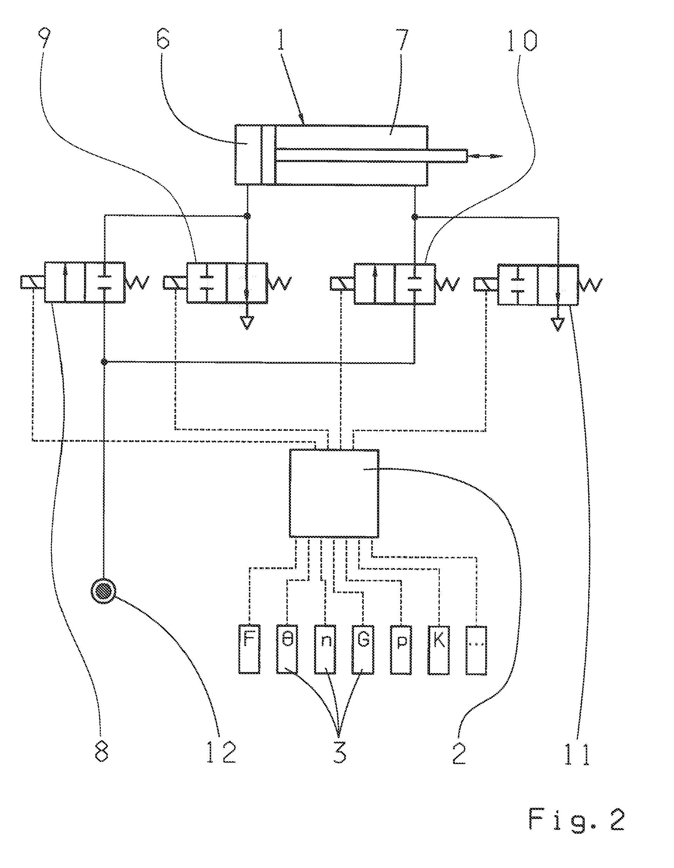

Die Fig. 1 und 2 zeigen exemplarisch zwei mögliche Ausführungsvarianten einer erfindungsgemäßen Anordnung zum Unterstützen von manuellen Schaltungen eines Fahrers bei einem Getriebe eines Fahrzeuges.

Unabhängig von der jeweiligen Ausführungsvariante ist ein Schaltservo vorgesehen, welcher durch eine Aktorik ansteuerbar ist. Der Schaltservo ist als Druckzylinder 1 ausgebildet, der die Unterstützungskraft pneumatisch erzeugt und an die nicht weiter dargestellte Schalteinrichtung oder dergleichen des Getriebes weiterleitet. Dies ist in den Fig. 1 und 2 nur durch einen Doppelpfeil an dem Kolben des Druckzylinders 1 angedeutet.

Erfindungsgemäß ist ein Steuergerät 2 mit der Aktorik gekoppelt, um eine Adaption oder Modulation der Unterstützungskraft in Abhängigkeit von vorbestimmten Eingangsgrößen des Antriebsstranges zu realisieren. Auf diese Weise kann in Abhängigkeit der gewählten Eingangsgrößen eine bedarfsgerechte und variable Ansteuerung der Aktorik zur Schaltkraftunterstützung mit dem Schaltservo ermöglicht werden. Das Druckniveau kann durch die erfindungsgemäße Anordnung völlig variabel an dem Druckzylinder 1 zur Unterstützung bzw. Adaption eingestellt werden.

Das Steuergerät 2 ist mit mehreren Sensoren 3 gekoppelt, um vorbestimmte Eingangsgrößen zu erfassen. In den Fig. 1 und 2 ist die Anzahl der Sensoren nur beispielhaft angedeutet. Vorzugsweise kann das Steuergerät mit Sensoren 3 zur Auffassung der von dem Fahrzeugführer aufgebrachten Schaltkraft F, der Getriebeöltemperatur θ, von Drehzahlen n, des Ganges G, von Drücken p, des Kupplungswegs K oder dergleichen gekoppelt sein.

Aus den erfassten Eingangsgrößen kann das Steuergerät 3 mithilfe zum Beispiel eines Prozessors und entsprechenden Speichermedien aus hinterlegten Kennfeldern entsprechende Ausgangsgrößen zur Adaption und/oder Modulation der Unterstützungskraft beziehungsweise des Ansteuerdruckes ermitteln. Bei den gezeigten Ausführungsvarianten sind eine elektrische Ansteuerung der Aktorik und eine pneumatische Betätigung zum Bereitstellen einer Unterstützungskraft vorgesehen. Es sind jedoch auch andere Ansteuerungs- und Betätigungsarten möglich.

Zur Ansteuerung des Druckzylinders 1 umfasst die Aktorik bei der ersten Ausführungsvariante gemäß Fig. 1 ein Druckbegrenzungsventil 4, welches als 2/2 Wegeventil ausgebildet ist. Das Begrenzungsventil 4 ist einerseits mit einer Druckmittelquelle 12 und andererseits mit einem 4/3-Wegeventil 5 gekoppelt. Das von dem Steuergerät 2 angesteuerte Druckbegrenzungsventil 4 reguliert und begrenzt den zulässigen Druck für das 4/3-Wegeventil 5 beziehungsweise den Druckzylinder 1. Das 4/3-Wegeventil 5 ist zum Ausfahren des Druckzylinders 1 mit einem ersten Druckraum 6 und zum Entlüften mit einem zweiten Druckraum 7 verbunden. Das Druckbegrenzungsventil 4 arbeitet bis zu dem maximal zulässigen Druck. Nach dem Erreichen des maximal zulässigen Druckes kann über das Druckbegrenzungsventil 4 keine Krafterhöhung über den Druckzylinder 1 mehr erreicht werden. Auf diese Weise kann die Unterstützungskraft begrenzt oder falls notwendig abgeschaltet werden.

Eine zweite mögliche Ausführungsvariante ist in Fig. 2 angedeutet. Bei dieser Ausführungsvariante ist das Steuergerät 2 ebenfalls mit mehreren Sensoren 3 gekoppelt, um entsprechende Eingangsgrößen zur Ansteuerung der Unterstützungskraft zu erfassen.

Im Unterschied zur ersten Ausführungsvariante ist das Steuergerät 2 mit mehreren Belüftungsventilen 8, 10 und mehreren Entlüftungsventilen 9, 11 zur Ansteuerung gekoppelt. Das erste Belüftungsventil 8 und das erste Entlüftungsventil 9 sind jeweils mit dem ersten Druckraum 6 des Druckzylinders 1 verbunden.

Das erste Belüftungsventil 8 dient zum Ausfahren des Schaltservos beziehungsweise des Druckzylinders 1 und verfügt über eine Sperr-Ruhestellung. Das erste Entlüftungsventil 9 dient zum Einfahren des Schaltservos beziehungsweise des Druckzylinders 1 und verfügt über eine Durchfluss-Ruhestellung. Auf diese Weise kann bei entsprechender Ansteuerung des ersten Belüftungsventils 8 und Bestromung des ersten Entlüftungsventils 9, dieses geschlossen werden, so dass je nach Ansteuerung des Belüftungsventils 8 eine beliebige Schaltkraftunterstützung eingestellt werden kann.

Der zweite Druckraum 7 des Druckzylinders 1 ist mit einem zweiten Belüftungsventil 10 und einem zweiten Entlüftungsventil 11 verbunden. Auf diese Weise kann auch eine Schaltkraftunterstützung in entgegengesetzter Richtung realisiert werden.

Sollte beispielsweise der Schaltkraft des Fahrers entgegengewirkt werden, also eine entgegengesetzte Unterstützung (Hemmung) mit der erfindungsgemäßen Anordnung realisiert werden, wird zuerst auf oben beschriebene Weise in dem entsprechenden Druckraum 6 oder 7 (je nach Schaltrichtung) der Druck so weit erhöht, bis die gewünschte Schaltkraft erreicht ist. Kann aufgrund der Drehzahlangleichung der zu synchronisierenden Getriebebauteile die Schaltkraft wieder erhöht werden, wird der vorerst aufgebaute Druck über eine entsprechende Ansteuerung des jeweiligen Entlüftungsventils 9 oder 11 langsam wieder reduziert.

Die Belüftungsventile 8, 10 sind in Sperr-Ruhestellung und die Entlüftungsventils 9,11 in Durchfluss-Ruhestellung ausgeführt. Auf diese Weise ist gewährleistet, dass bei einem Ausfall des Steuergerätes 2 das Getriebe immer noch von Hand schaltbar ist. Im stromlosen Zustand sind die Druckräume 6, 7 zur Umgebung hin geöffnet und zur Druckversorgung hin geschlossen. Der Druckzylinder 1 ist in diesem Zustand druckfrei. Es sind auch andere Ausführungen der Ventile denkbar.

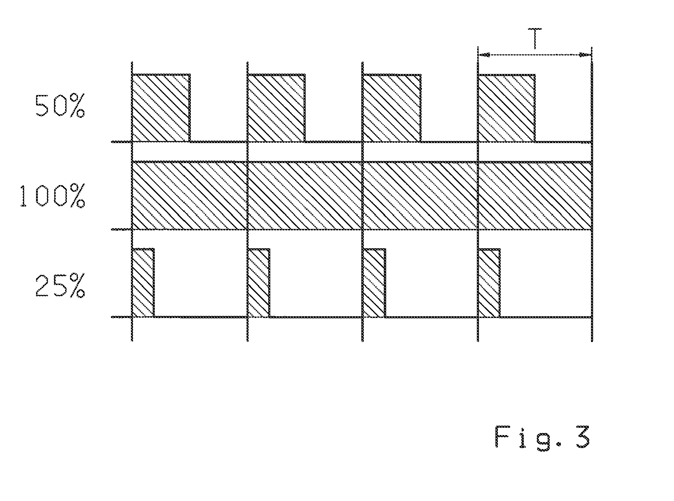

Die Ansteuerung der Aktorik des Druckzylinders 1 kann unabhängig von der jeweiligen Ausführungsvariante mittels der Puls-Weiten-Modulation PWM oder der Puls-Frequenz-Modulation PFM über das Steuergerät 2 erfolgen. In dem in Fig. 3 dargestellten Diagramm sind Beispiele für mögliche PWM-Signale gezeigt.

Bei einer konstanten Frequenz von z.B. 100 Hz wird der Strom innerhalb einer Periode ein und wieder ausgeschaltet. Das Verhältnis von Einschaltdauer zur Ausschaltdauer ist das so genannte Tastverhältnis. Bei einem 50 % PWM-Signal ist die Einschaltdauer gleich groß wie die Ausschaltdauer. Bei einem 100 % PWM-Signal bleibt das angesteuerte Ventil permanent geschaltet. Bei einem 25 % PWM-Signal ist das angesteuerte Ventil nur noch ein Viertel der Zeitdauer eingeschaltet.

Auf diese Weise wirkt das so angesteuerte Ventil bei Einschaltdauern kleiner 100 % als Drossel. Bei Einschaltdauern von 100 % ist z.B. bei einem Sperr-Ruhestellungsventil, wie z.B. den Belüftungsventilen 8, 10, der Druck vor und nach dem Ventil gleich groß. Bei einem Durchfluss-Ruhestellungsventil, wie z.B. bei den Entlüftungsventilen 9,11, bleibt dieses ständig geschlossen. Die Taktfrequenz ist 1/T.

Die in Fig. 3 dargestellten PWM-Signale sind nur beispielhaft, so dass ohne weiteres auch andere Ansteuerungsmöglichkeiten durch das Steuergerät 2 bei der erfindungsgemäßen Anordnung denkbar sind.

### Bezugszeichen

- 1: Druckzylinder
- 2: Steuergerät
- 3: Sensor
- 4: Druckbegrenzungsventil
- 5: 4/3-Wegeventil
- 6: erster Druckraum
- 7: zweiter Druckraum
- 8: erstes Belüftungsventil
- 9: erstes Entlüftungsventil
- 10: zweites Belüftungsventil
- 11: zweites Entlüftungsventil
- 12: Druckmittelquelle
- F: Schaltkraft
- Θ: Getriebeöltemperatur
- n: Drehzahl
- G: Gang
- p: Druck
- K: Kupplungsweg

## Patentansprüche

1. Anordnung zur Unterstützung von manuellen Schaltungen eines Fahrers bei einem Getriebe eines Fahrzeuges, mit zumindest einem Schaltservo, wobei die von dem Schaltservo ausgegebene Unterstützungskraft mittels einer Aktorik steuerbar ist, **dadurch gekennzeichnet, dass** die Aktorik mit zumindest einem Steuergerät (2) zur Adaption der Unterstützungskraft in Abhängigkeit von vorbestimmten Eingangsgrößen des Antriebsstranges gekoppelt ist.

2. Anordnung nach Anspruch 1, **dadurch gekennzeichnet, dass** das Steuergerät (2) mit zumindest einem Sensor (3) zum Erfassen der Eingangsgrößen gekoppelt ist, wobei das Steuergerät (2) anhand der erfassten Eingangsgrößen aus gespeicherten Kennfeldern entsprechende Ausgangsgrößen zur Adaption und/oder Modulation der Unterstützungskraft ermittelt.

3. Anordnung nach Anspruch 2, **dadurch gekennzeichnet, dass** das Steuergerät (2) mit Sensoren (3) zur Erfassung der vom Fahrer aufgebrachten Schaltkraft (F), der Getriebeöltemperatur (θ), der Drehzahl (n), des Ganges (G), des Druckes (p), des Kupplungsweges (K) und/oder weiterer den Synchronisiervorgang beeinflussender Messgrößen gekoppelt ist.

4. Anordnung nach einem der vorangehenden Ansprüche, **dadurch gekennzeichnet, dass** die Unterstützungskraft durch den Schaltservo mit der dazugehörigen Aktorik pneumatisch, hydraulisch, elektromotorisch und/oder elektromagnetisch realisierbar ist.

5. Anordnung nach einem der vorangehenden Ansprüche, **dadurch gekennzeichnet, dass** die Aktorik des Schaltservos über das Steuergerät (2) mittels PWM-Signalen ansteuerbar ist.

6. Anordnung nach einem der vorangehenden Ansprüche, **dadurch gekennzeichnet, dass** die Aktorik des Schaltservos über das Steuergerät (2) mittels PFM-Signalen ansteuerbar ist.

7. Anordnung nach einem der vorangehenden Ansprüche, **dadurch gekennzeichnet, dass** das Steuergerät (2) mit zumindest einem Druckbegrenzungsventil (4) gekoppelt ist, welches den zulässigen Druck zumindest eines Wegeventils (5) begrenzt, wobei das Druckbegrenzungsventil (4) und das Wegeventil (5) die Aktorik des als Druckzylinder (1) ausgebildeten Schaltservos bilden.

8. Anordnung nach Anspruch 7, **dadurch gekennzeichnet, dass** das Wegeventil (5) zum Ausfahren des Druckzylinders (1) mit einem ersten Druckraum (6) und zum Entlüften mit einem zweiten Druckraum (7) des Druckzylinders (1) verbunden ist.

9. Anordnung nach einem der vorangehenden Ansprüche, **dadurch gekennzeichnet, dass** das Steuergerät (2) mit zumindest einem Belüftungsventil (8, 10) zum Ausfahren des Druckzylinders (1) und mit zumindest einem Entlüftungsventil (9, 11) zum Entlüften des Druckzylinders (1) gekoppelt ist, wobei das Belüftungsventil (8, 10) und das Entlüftungsventil (9, 11) die Aktorik des als Druckzylinder (1) ausgebildeten Schaltservos bilden.

10. Anordnung nach Anspruch 9, **dadurch gekennzeichnet, dass** jeweils ein erstes Belüftungsventil (8) zum Ausfahren des Druckzylinders (1) in eine erste Betätigungsrichtung und ein erstes Entlüftungsventil (9) zum Einfahren des Druckzylinders (1) jeweils mit einem ersten Druckraum (6) des Druckzylinders (1) verbunden sind, und dass ein zweites Belüftungsventil (10) zum Ausfahren des Druckzylinders (1) in eine zweite Betätigungsrichtung und ein zweites Entlüftungsventil (11) zum Einfahren des Druckzylinders (1) jeweils mit einem zweiten Druckraum (7) des Druckzylinders (1) verbunden sind.

11. Anordnung nach einem der vorangehenden Ansprüche, **dadurch gekennzeichnet, dass** über das Steuergerät (2) neben der Schaltkraftunterstützung weitere Antriebsstrangfunktionen ansteuerbar sind.

12. Anordnung nach Anspruch 11, **dadurch gekennzeichnet, dass** als Antriebsstrangfunktionen mechanische Sperren in dem Getriebe durch die Ansteuerung des Schaltservos ersetzbar sind.
